# FASCICULE DE BREVET EUROPEEN

(11) **EP 3 424 673 B1**
(45) Date de publication et mention de la délivrance du brevet: **12.02.2020**
(21) Numéro de dépôt: 18170020.4
(22) Date de dépôt: 30.04.2018
(51) Int. Cl.: B29C 45/27

(54) **POINTE D'INJECTION AMOVIBLE POUR LE MOULAGE DE MATIÈRE PLASTIQUE**
ABNEHMBARE EINSPRITZDÜSE ZUM SPRITZGIESSEN VON KUNSTSTOFF
REMOVABLE INJECTION NOZZLE FOR PLASTIC INJECTION

(30) Priorité: 06.07.2017 FR 1756360
(43) Date de publication de la demande: 09.01.2019
(73) Titulaire: CEMA Technologies, 72100 Le Mans (FR)
(72) Inventeur: BOUILLOUD, Marc, 72200 La Flèche (FR); PERROCHON, Julien, 72000 Le Mans (FR)
(74) Mandataire: Laget, Jean-Loup

(56) Documents cités:
- US-A- 5 139 724
- US-A1- 2012 187 610

## Description

### DOMAINE DE L'INVENTION

L'invention concerne une pointe d'injection amovible pour le moulage de pièces en matière plastique. Plus particulièrement, elle concerne la pointe du canal d'amenée de la matière plastique fluide au seuil d'injection.

### ART ANTERIEUR

Le document US 5 223 275 décrit un canal d'amenée de la matière plastique fluide se terminant par un passage tronconique, apte à être fermé par un obturateur de forme correspondante.

Le document EP 2 952 323 décrit des canaux d'amenée de la matière plastique fluide se terminant par une portion de canal cylindrique ou légèrement tronconique, convergente ou divergente, dans laquelle il n'est pas prévu d'obturateur.

Le document US 2012/187 610 décrit une buse d'injection pour système de moulage sans source de chauffage externe, comprenant un corps extérieur pour coupler la buse à un distributeur de résine et un insert thermiquement conducteur. Au moins une portion d'une longueur axiale de l'insert a un diamètre extérieur qui est inférieur à un diamètre intérieur d'une portion coaxiale du corps extérieur. La différence entre les diamètres extérieur et intérieur définit un espace d'air isolant sur au moins une portion de la longueur de la buse.

Dans ces exemples de réalisation, le contrôle de la température au niveau de l'extrémité du canal d'amenée reste délicat en raison du risque de gélification de la matière plastique entre deux injections.

### BUTS ET RESUME

L'un des buts de l'invention est de minimiser le risque de gélification de la matière plastique entre deux injections.

Un autre but de l'invention est d'améliorer les conditions de l'injection de la matière plastique fluide.

Un autre but de l'invention est de diminuer la température de la matière plastique fluide à injecter.

L'invention a pour objet une pointe d'injection amovible pour le moulage de matière plastique, située à l'extrémité d'un canal d'amenée de la matière plastique fluide à proximité du seuil d'injection, caractérisée en ce qu'elle comporte une restriction du canal d'amenée de la matière plastique, constituée par un profil cylindrique de longueur comprise entre 0,5 mm et 3 mm et de diamètre compris entre 0,3 mm et 1 mm.

Selon un mode de réalisation de l'invention, la restriction est constituée par un tube cylindrique axial.

Selon un mode de réalisation de l'invention, le diamètre du tube est de l'ordre de 30% du diamètre du canal d'amenée de la matière plastique fluide.

### DESSINS

L'invention est décrite ci-après avec référence au dessin annexé dans lequel :
La figure 1 est une vue en coupe axiale d'un exemple de réalisation simplifiée d'une pointe d'injection directe pour le moulage de matière plastique.
La figure 2 est une vue en perspective d'une coupe axiale d'un exemple de réalisation d'une pointe d'injection à obturateur pour le moulage de matière plastique.

### DESCRIPTION

La pointe d'injection 1 est située à l'extrémité d'un canal 2 d'amenée de la matière plastique fluide à proximité du seuil d'injection 3. A son extrémité, la pointe d'injection 1 comporte une restriction du canal 2 constituée par un tube 4 cylindrique axial, relié au canal 2 par un raccord tronconique 5. La longueur du tube 4 est comprise entre 0,5 mm et 3 mm. Le diamètre du tube 4 est compris entre 0,3 mm et 1 mm. Par rapport au canal 2 le diamètre du tube 4 est de l'ordre de 30% du diamètre du canal 2, mais peut être compris entre 10% et 50% du diamètre du canal 2.

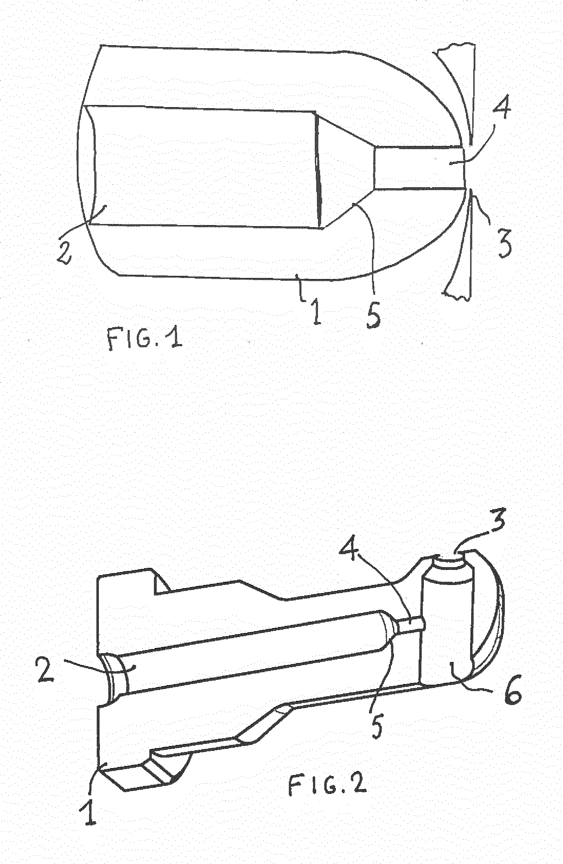

Dans l'exemple de réalisation de la figure 2, le tube 4 débouche dans un alésage 6, d'axe sensiblement perpendiculaire à l'axe du tube 4, aboutissant au seuil d'injection 3. Cet alésage 6 est destiné au passage d'un obturateur non représenté.

La restriction du canal d'amenée de la matière plastique fluide à la pointe d'injection assure une perte de charge supérieure à la totalité des pertes de charge, dans les canalisations d'amenée de la matière plastique au seuil d'injection, d'une part, en amont, et d'autre part, en aval de la restriction.

L'étroitesse relative du tube 4 par rapport au canal d'amenée 2 amplifie pendant l'injection un phénomène de dissipation visqueuse avec élévation corrélative de la température, significative sur les couches supérieures de la matière plastique exposées à un phénomène de cisaillement.

L'augmentation corrélative de la température est pour une partie récupérée dans la pointe d'injection 1 au cours du franchissement du tube 4, ce qui permet de réduire la consommation énergétique du système d'injection, et pour une autre partie répartie dans les couches inférieures de la matière plastique, ce qui permet de réduire la température d'amenée de la matière plastique fluide dans le canal 2. Il en résulte une économie globale d'énergie de chauffage de la matière plastique et des conditions de fonctionnement moins sévères.

L'importance de l'économie d'énergie est fonction du rapport entre le débit d'injection et la longueur de la restriction, et du rapport entre le diamètre de la restriction et celui du canal d'amenée de la matière plastique.

## Revendications

1. Pointe d'injection amovible pour le moulage de matière plastique, située à l'extrémité d'un canal (2) d'amenée de la matière plastique fluide à proximité d'un seuil d'injection (3), **caractérisée en ce qu'**elle comporte une restriction du canal d'amenée de la matière plastique, constituée par un profil cylindrique (4) de longueur comprise entre 0,5 et 3 mm et de diamètre compris entre 0,3 et 1 mm.

2. Pointe d'injection selon la revendication 1, **caractérisée en ce que** la restriction est constituée par un tube cylindrique axial.

3. Pointe d'injection selon la revendication 1, **caractérisée en ce que** le diamètre du tube (4) est de l'ordre de 30% du diamètre du canal (2) d'amenée de la matière plastique fluide.

## Patentansprüche

1. Abnehmbare Injektionsspitze für das Spritzgießen von Kunststoff, die sich am Ende eines Zufuhrkanals (2) des fluiden Kunststoffs in der Nähe eines Anspritzpunkts (3) befindet, **dadurch gekennzeichnet, dass** sie eine Verengung des Zufuhrkanals des Kunststoffs aufweist, gebildet von einem zylindrischen Profil (4) einer Länge zwischen 0,5 und 3 mm und eines Durchmessers zwischen 0,3 und 1 mm.

2. Injektionsspitze nach Anspruch 1, **dadurch gekennzeichnet, dass** die Verengung von einem axialen zylindrischen Rohr gebildet ist.

3. Injektionsspitze nach Anspruch 1, **dadurch gekennzeichnet, dass** der Durchmesser des Rohrs (4) zirka 30 % des Durchmessers des Zufuhrkanals (2) des fluiden Kunststoffs beträgt.

## Claims

1. A removable injection tip for molding plastic material, located at the end of an intake channel (2) for supplying fluid plastic material near an injection threshold (3), **characterized in that** it includes a restriction of the intake channel of the plastic material, made up of a cylindrical profile (4) with a length of between 0.5 and 3 mm and with a diameter of between 0.3 and 1 mm.

2. The injection tip according to claim 1, **characterized in that** the restriction is made up of an axial cylindrical tube.

3. The injection tip according to claim 1, **characterized in that** the diameter of the tube (4) is in the order of 30% of the diameter of the intake channel (2) of the fluid plastic material.
